Europäisches Patentamt

**European Patent Office**

**Office européen des brevets**

(19)

(11) Publication number: **0 266 991**

**A2**

(12) # EUROPEAN PATENT APPLICATION

(21) Application number: **87309678.8**

(22) Date of filing: **02.11.87**

(51) Int. Cl.4: **G11B 19/20** , **F16C 39/06**

(30) Priority: **07.11.86 US 929134**

(43) Date of publication of application:
**11.05.88 Bulletin 88/19**

(84) Designated Contracting States:
**DE FR GB IT**

(71) Applicant: **Hewlett-Packard Company**
**3000 Hanover Street**
**Palo Alto California 94304(US)**

(72) Inventor: **Mackanic, James Clifford**
**3410 Mountain View Drive**
**Boise Idaho 83704(US)**

(74) Representative: **Colgan, Stephen James et al**
**CARPMAELS & RANSFORD 43 Bloomsbury**
**Square**
**London WC1A 2RA.(GB)**

(54) **Magnetic preload for motor shaft bearing.**

(57) In a high-speed rotary disc memory device, a
disc hub (3) is supported for rotation relative to a
stationary chassis (1) by a spindle assembly. The
spindle assembly includes a journal bearing (7), ball
bearing assembly (13) and a radial-gap brushless
DC motor. A spindle shaft (5) couples rotational
motion from the DC motor to the disc hub (3). The
journal bearing (7) provides radial support and rota-
tional stiffness while the ball bearing assembly (13)
provides axial support for the spindle shaft (5). An
annular permanent magnet (9) secured in place by a
magnet retainer ring (11) provides an axial magnetic
force which displaces slightly the ball bearing inner
ring race (12) relative to the outer ring race (14)
preloading the ball bearing and minimizing bearing
play.

FIG 1

EP 0 266 991 A2

## MAGNETIC PRELOAD FOR MOTOR SHAFT BEARING

### Background of the Invention

The present invention relates to a bearing assembly for relatively rotatably supporting rotatory and stationary members and transmitting a thrust load therebetween, and more particularly, to a permanent magnet arranged to provide an axial preload for a spindle assembly ball bearing.

In rotating disc data storage devices, data storage discs mounted on a hub are rotated at high speed while a transducer positioned adjacent a major surface of an associated disc tracks or follows concentric data tracks to read or write data on the disc. To insure tracking accuracy and minimize errors, such as run out errors, wobble and bearing play associated with the spindle or shaft which drives the hub must be minimized. Typically, the hub is rotatably mounted on a spindle or shaft supported by ball bearings or thrust bearings.

It is known in the art to provide a bearing assembly by which the rotor of a motor is rotatably supported with respect to the stator. It is also known to utilize the magnetic force provided by an electromagnet to lift the rotor weight, in the case of a vertically oriented shaft, thereby relieving the thrust bearing of its load when operating. U.S. Patent Number 2,557,075 entitled "Vertical-Shaft Dynamo-Electric Machine" issued to James V. Caputo on June 19, 1951 discloses such an apparatus as described hereinabove. U.S. Patent Number 3,356,425 entitled "Rotating Machine" issued to Raymond Carriere et al on December 5, 1967 discloses magnetic apparatus for maintaining a rotating shaft in centered position relative to a non-rotating frame there by relieving radial thrust to the shaft bearings. Apparatus as described above is unsuitable for use in magnetic disc drives because of the need to shield the data storage discs and read/write transducers from magnetic fields.

U.S. Patent Number 4,480,881 entitled "Bearing Device" issued to Tohru Fujimori on November 6, 1984 discloses a ball bearing device for rotatably supporting a hub on a fixed spindle and transmitting a thrust load therebetween. The ball bearing device comprises a pair of a ball bearing assemblies, including inner and outer races, mounted on the spindle in spaced-apart relationship having a helical compression spring disposed on the spindle between the ball bearing assemblies for urging the inner races axially apart and thereby pre-loading the ball bearings for distributing the thrust load between the two ball bearing assemblies. The hub embodies the rotor of a permanent magnet motor having the rotor magnet extending around an axial opening recess in the hub. The spindle includes a fixed shaft extending into the hub recess and stator windings arranged around the fixed shaft on a stator yoke axially confronting the rotor magnet. The bearing assemblies comprise ball bearings having an outer ring race engaging the inner cylindrical side wall of the recess in the hub and an inner ring race disposed on the fixed shaft. The helical compression spring disposed on the fixed shaft between the two bearing assemblies axially preloads the ball bearings and minimizes play between the balls of each bearing and the respective races.

In high performance rotating disc memory devices, drive spindles must provide increasingly higher rotational accuracy as track densities increase. Prior art disc drive spindles typically employ ball bearings such as disclosed by Fujimori. The rotational accuracy of these spindles is determined by the moving ball bearing components. To achieve the required track position accuracy and stability, prior art disc drives typically utilize complex head-positioning servo systems. However, these servo systems are expensive and tend to be unreliable.

### Summary of the Invention

The present invention provides a high speed rotating disc memory device in which rotational motion provided by a DC motor is coupled to a hub supporting one or more data storage discs for rotation by a spindle or shaft. The spindle is supported for rotational motion relative to a fixed chassis by a single ball bearing assembly. Rotational stiffness and radial support for the spindle is provided by a hydrodynamic journal bearing. A ring-shaped permanent magnet mounted on the chassis opposite the motor rotor provides an axial force to pre-load the ball bearing assembly.

Typically, prior art disc drives utilizing a journal bearing to provide radial support for the spindle have the rotor and stator offset slightly to provide a net axial force and thereby provide a pre-load for the ball bearings. However, this method does not provide a great enough pre-load force for high performance disc drive spindles. Further, it reduces motor performance and causes fluctuating axial forces.

The present invention provides an independent magnetic circuit that does not affect the performance of the spindle motor and provides a steady magnetic force having sufficient strength to pre-load the ball bearing assembly for accurate spindle performance. A magnet retainer provides a low reluctance path for the magnetic flux and optimizes the magnetic flux density in the magnetic circuit providing maximum flux density in the gap between the permanent magnet and the rotor. The magnetic circuit is designed to saturate the rotor thereby reducing the sensitivity to variations in the spacing between the rotor and the permanent magnet.

The design of the permanent magnet and retainer allows the use of a radial-gap DC permanent magnet motor. A radial-gap motor is more compact and provides much more efficient use of space than an axial-gap motor providing the same torque. Radial-gap motors have lower electrical losses than axial-gap motors and are better suited for high-speed applications.

Brief Description of the Drawings

Figure 1 is a sectional view of a disc drive spindle assembly according to the principles of the present invention; and

Figure 2 is a section view of the ball bearing assembly utilized in the disc drive spindle assembly shown in Figure 1.

Detailed Description of the Preferred Embodiment

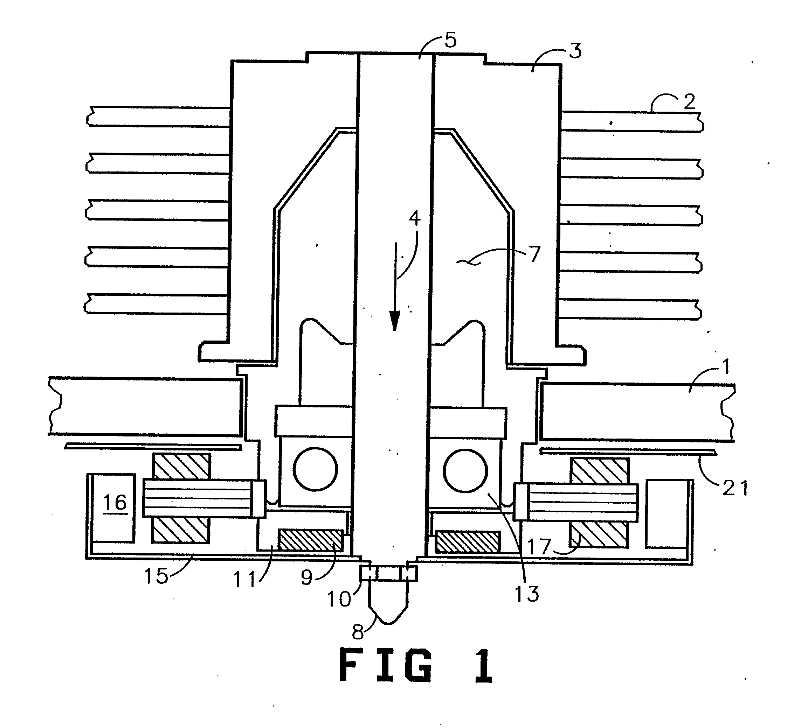

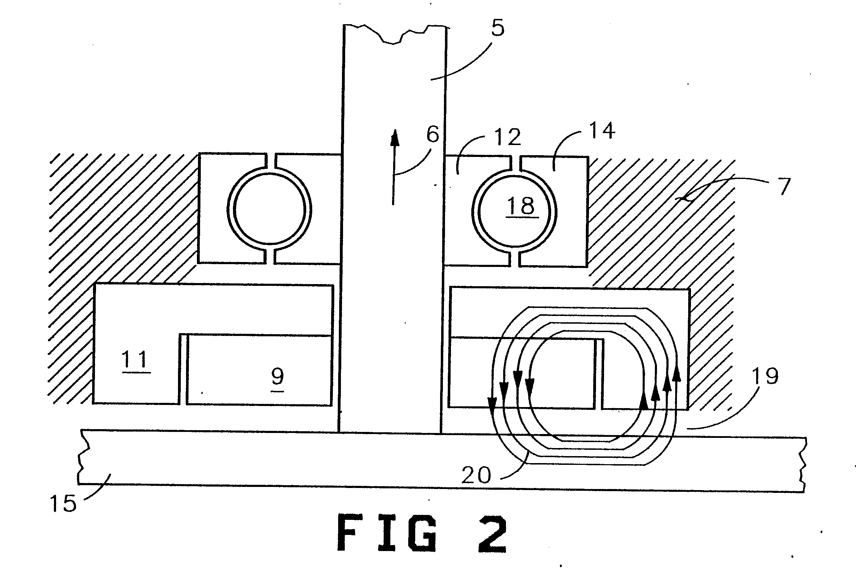

Referring now to Figs. 1 and 2, a disc drive spindle assembly constructed according to the principles of the present invention is shown. Spindle shaft 5 having hub 3 press-fitted or otherwise secured to it extends through and is axially supported by ball bearing assembly 13 for rotatory motion with respect to a stationary member or chassis 1 and for transmitting a thrust load therebetween. Hub 3 supports data storage media 2 which may be one or more conventional magnetic or optic memory discs. Hub 3 may equally well serve as the supply or take-up reel mount of a magnetic tape drive or other device. Spindle shaft 5 is directly driven by means of a permanent magnet DC motor and is supported in the radial direction by journal bearing 7. The weight of the storage media 2, the hub 3, shaft 5 and the rotor 15 constitutes an axial thrust load as indicated by arrow 4 which is supported by chassis 1 via ball bearing assembly 13 and journal bearing housing 7. Radial support and rotational stiffness for spindle shaft 5 is provided by a hydrodynamic film of lubricating fluid sealed within journal bearing housing 7. Journal bearing 7 is described in co-pending U.S. Patent Application serial number 06/658,086 filed on October 5, 1984 and will not be further described herein. The journal bearing housing 7 is inserted through a hole in chassis 1 and is bonded or otherwise secured to chassis 1. Ball bearing assembly 13 is press-fitted or otherwise suitably secured in an annular recess in the bottom portion of journal bearing housing 7 which protrudes through chassis 1. A ring shaped permanent magnet 9 is held in magnet retainer 11 which is secured to the bottom of journal bearing housing 7 with screws (not shown) or other suitable means.

Spindle shaft 5 and hub 3 are driven at a constant speed by a radial-gap permanent magnet DC motor comprising rotor 15 having a ring-shaped permanent magnet 16 disposed around its periphery and stator coils 17 suitably secured in a circular array around the lower portion of journal bearing housing 7 in facing relationship with ring magnet 16. The rotor 15 is fixedly secured to spindle shaft 5 with nut 10 on threaded bolt 8 which is machined into the lower end of spindle shaft 5. Circuit boards 21 mounted on the underside of chassis 1 contain the necessary electronic circuitry to provide the control and drive signals to the DC motor. A radial-gap motor rather than an axial-gap motor is utilized to meet size and power constraints. A radial-gap motor is better suited for high speed applications and produces a greater torque for the same size motor than a axial-gap motor. The rotor 15 is maintained in spaced-apart relationship with the ring magnet 9 to form gap 19. The rotor 15 is saturated to maintain a constant magnetic flux density, as represented by arrows 20, in the gap 19.

As shown in Figure 2, ball bearing assembly 13 includes an outer ring race 14 and an inner ring race 12 having radially confronting annular grooved surfaces and balls 18 disposed between ring races 14 and 12 in rolling contact with the grooved surfaces thereof. The outer ring race 14 of ball bearing assembly 13 is bonded or press-fitted into an annular recess in the lower portion of journal bearing housing 7. Spindle shaft 5 is pressed through inner ring race 12 and extends through the journal bearing into the hub 3.

The thrust load as indicated by arrow 4 on Figure 1 is applied to the inner ring race 12 with the result that inner ring race 12 is offset downwardly relative to outer ring race 14. Ring magnet 9 provides an attractive or lifting force on rotor 15, represented by arrow 6 on Figure 2, which lifts the rotor 15. As the attractive force of the ring magnet 9 is greater than the thrust load resulting from the combined weight of the spindle shaft 5, hub 3 and rotor 15, the inner ring race 12 is offset upwardly relative to outer ring race 14. Thus, in ball bearing assembly 13, the load is relieved and play is eliminated between races 12 and 14 and balls 18 to ensure accurate, vibration-free rotational mounting of hub 3 and spindle shaft 5 relative to chassis 1.

Magnet retainer 11 provides a low reluctance path for magnetic flux 20 ensuring maximum flux density in gap 19 and that rotor 15 is magnetically saturated thereby reducing sensitivity to slight changes in gap 19 width.

## Claims

1. Apparatus for preloading an axial-loaded bearing (13) which supports a shaft member (5) for rotation relative to a stationary member (7), characterized by:

magnetic means (9), mounted on said stationary member (7), providing a magnetic force in an axial direction parallel and opposite to said axial load for preloading said axial loaded bearing (13).

2. Apparatus as in Claim 1, characterized in that said apparatus further comprises retainer means (11) mounted to said stationary member (7) for retaining said magnetic means (9) and for providing a low reluctance path for magnetic flux.

3. Apparatus as in Claim 2 characterized in that said magnetic means (9) comprises a permanent magnet.

4. A rotary disc data storage device comprising:

a chassis (1);

rotary hub means (3) for mounting at least one data storage disc (2), said rotary hub means (3) having an axially opening recess and including a fixed shaft (5) extending axially from said opening recess, said shaft (5) for rotatably mounting said rotary hub means (3) to said chassis (1);

journal bearing means (7) rigidly attached to said chassis (1) including a journal bearing housing (7) having an axial bore for receiving said shaft (5), said journal bearing housing (7) extending into said opening recess in spaced-apart relationship with said rotary hub means (3), said shaft (5) extending through said journal bearing housing (7), said journal bearing means providing radial support and stiffness for said shaft (5);

ball bearing means (13) including inner and outer ring races (12,14) having radially confronting annular grooved surfaces and balls (18) between said ring races (12,14) in rolling contact with said grooved surfaces, said shaft (15) extended through and fixedly attached to said inner ring race (12), said outer ring race (14) fixedly attached to said chassis (1), said ball bearing means (13) providing axial support for said rotary hub means (13) and transmitting a thrust load between said shaft (15) and said chassis (1);

motor means (15,16,17) coupled to said shaft (15) providing rotational motion to said rotary hub means (3);

characterized by magnetic means (9) mounted on said chassis (1) providing an axial magnetic force on said shaft (5) for preloading said ball bearing means (13).

5. A rotary disc data storage device as in Claim 4 characterized in that said chassis (1) includes an aperture for receiving said journal bearing housing (7), said journal bearing housing (7) inserted into and seated in said aperture and extending through said chassis (1), and said journal bearing housing (7) having a counterbore forming a recess concentric to said bore for receiving said outer ring race (14), said outer ring race (14) seated and fixedly secured in said recess.

6. A rotary disc data storage device as in Claim 5 characterized in that said motor means (15,16,17) comprises a radial-gap motor having its rotor (15) fixedly attached to said shaft (5).

7. A rotary disc data storage device as in Claim 6 characterized in that said magnetic means (9) comprises an annular permanent magnet (9).

8. A rotary disc data storage device as in Claim 7 further comprising a magnet retainer means (11) for retaining said annular permanent magnet (9) and having said shaft (15) extending through said annular permanent magnet (9), said magnet retainer means (11) mounted on said journal bearing housing (7) disposed between said rotor (15) and said journal bearing housing (7) retaining said annular permanent magnet (9) in spaced-apart relationship with said rotor (15) forming a gap therebetween, said axial magnetic force urging said rotor (15) towards said annular permanent magnet (9) displacing said inner ring race (12) relative to said outer ring race (14) and thereby preloading said ball bearing means (13).

FIG 1

0 266 991

# FIG 2

0 266 991